# EUROPEAN PATENT APPLICATION

(11) **EP 1 821 058 A1**
(43) Date of publication of application: **22.08.2007**
(21) Application number: 06425091.3
(22) Date of filing: 15.02.2006
(51) Int. Cl.: F28F 9/04

(54) **Clamp for fixing the ends of two tubes to a heat exchanger**

(71) Applicant: DENSO THERMAL SYSTEMS S.p.A., 10046 Poirino (Torino) (IT)
(72) Inventor: Ferrarese, Claudio c/o Denso Thermal Systems Spa, 10046, Poirino (Torino) (IT)
(74) Representative: Marchitelli, Mauro

(57) **Abstract**

A bracket for fastening the ends (18a) of two tubes (18) to a heat exchanger (10) provided with a collecting tank (12) having two junction elements (14) respectively for the inflow and the outflow of the heat exchange fluid, in which each of said tubes (18) has a radial collar (20) wherein pressed in the axial direction against a corresponding collar (16) of a respective junction element (14) with the interposition of a sealing gasket (22).

The bracket comprises a first and a second body (26, 28) made of plastic material, each of which has two U shaped seats (30, 32) which co-operate with the seats (30, 32) of the other body (26, 28) to define a circular seat which encloses said collars (16, 20). The two bodies (26, 28) are able to mutually fasten in snap-in fashion by means of a mutual movement in a rectilinear direction, orthogonal to the longitudinal axes of the tubes (18).

## Description

The present invention relates in general to heat exchange systems for vehicles and it specifically relates to a bracket able to fasten the ends of two tubes to a heat exchanger, in particular to a radiator for heating the air flow sent into the passenger compartment of a vehicle.

In traditional solutions, the radiator for heating the air flow has a collecting tank with two junction elements, respectively for the entry inflow and outflow of the heat exchange liquid. Two tubes, respectively for the inflow and the outflow of the heat exchange fluid, are fastened to the two junction elements of the heat exchanger. Generally, each tube is fastened to the respective junction element by means of a metallic clamp closed by a screw, which presses in axial direction a collar of the tube against a corresponding collar of the junction element.

The main drawback of the known solution is represented by the relatively long time needed to fasten the tubes to the heat exchanger. Moreover, the known solution is hard to automate and it requires the use of a high number of components (two clamps and two screws).

The object of the present invention is to provide a fastening bracket that allows to overcome the drawbacks of the prior art.

According to the present invention, said object is achieved by a fastening bracket having the characteristics set out in the claims.

The present invention shall now be described in detail with reference to the accompanying drawings, provided purely by way of non limiting example, in which:
- Figure 1 is a perspective view of a fastening bracket according to the present invention in open position, during connection to a radiator,
- Figure 2 is a perspective view of the fastening bracket of Figure 1 in closed position,
- Figure 3 is a sectioned perspective view of a fastening bracket according to the present invention in closed position,
- Figure 4 is a sectioned perspective view of a part of the fastening bracket of Figure 3, and
- Figure 5 is a sectioned perspective view of the fastening bracket according to the present invention mounted on the radiator.

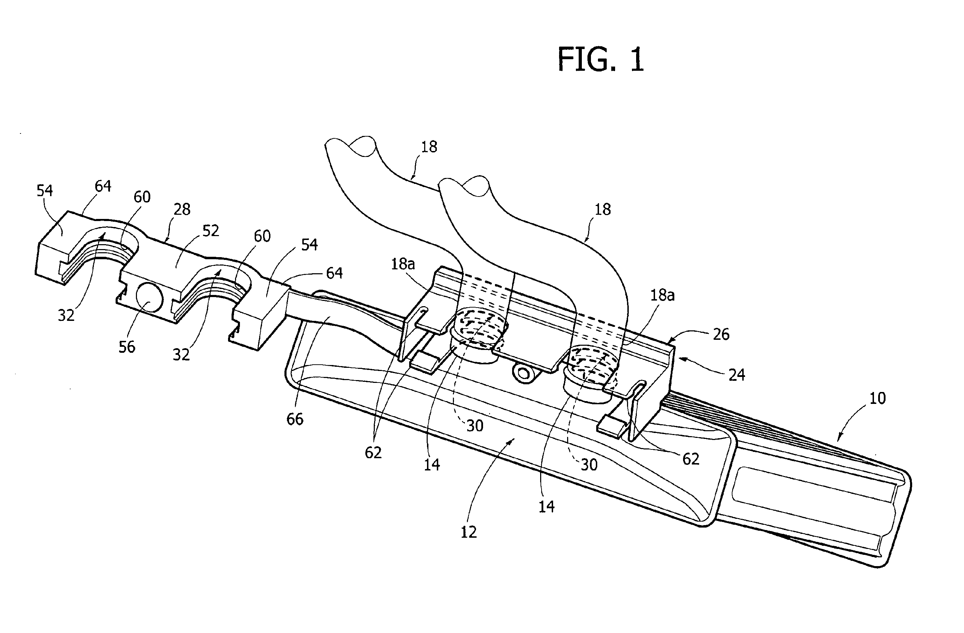

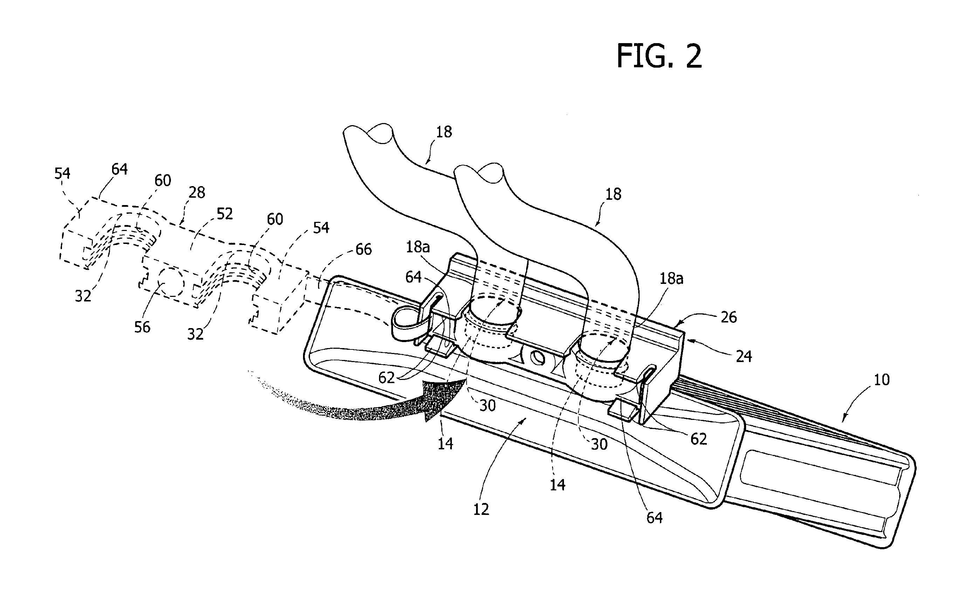

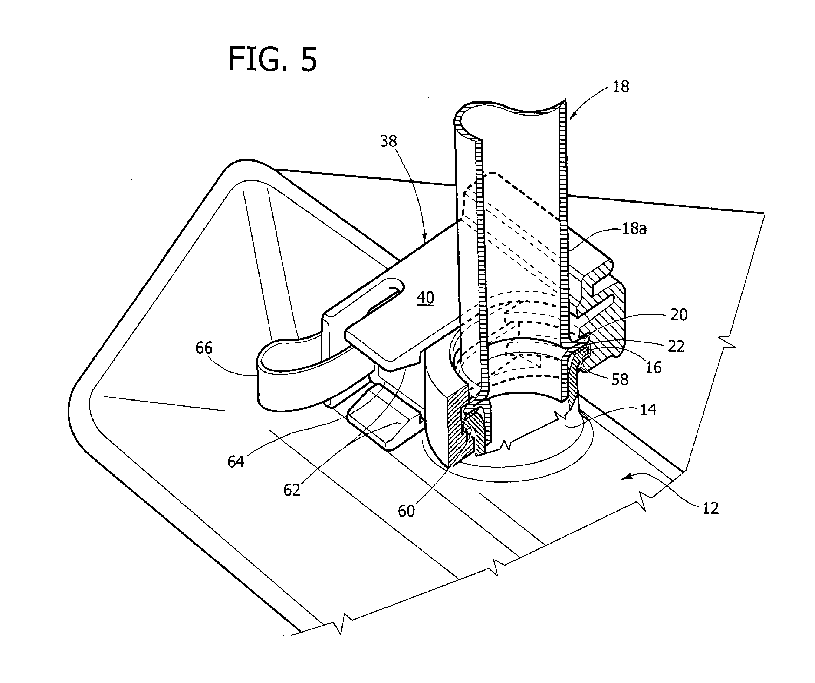

With reference to Figures 1 and 2, the number 10 designates a heating radiator for an air treatment assembly for vehicles. The radiator 10, known in itself, has a collecting tank 12 provided with junction elements 14 for the inflow and the outflow of the heat exchange liquid. Each of the two junction elements 14 is formed by a short segment of tube projecting from an outer surface of the collecting tank 12. The two junction elements 14 are arranged in mutually close positions and have mutually parallel axes. As shown in greater detail in Figure 5, each junction element 14 ends with a collar 16 projecting outwards in radial direction relative to the axis of the junction element 14.

With reference to Figures 1 and 2, the heating radiator 10 is connected to two tubes for the inflow and the outflow of the heat exchange liquid. Each tube 18 has an end portion 18a which is fastened in liquid-tight fashion to a respective junction element 14. As shown in Figure 5, the end portion 18a of each tube 18 has a radial collar projecting from the outer surface of the tube in radial direction relative to the longitudinal axis of the tube. The collar 20 of the tube 18 bears frontally against the collar 16 of the junction element 14. A sealing gasket 22 is interposed between the radial collars 16, 20.

With reference to Figures 1 and 2, the reference number 24 designates a bracket according to the present invention able to fasten the ends 18a of the two tubes to the two junction elements 14 of the collecting tank 12. The bracket 24 comprises two mutually complementary bodies of plastic material 26, 28 that couple together in snap-on fashion. Each of the two bodies 26, 28 has two U-shaped seats 30, 32 open on one side. Each seat 30, 32 has a semi-circular arched part and two parallel rectilinear walls. When the two bodies 26, 28 are mutually coupled, the complementary seats 30, 32 define a single circular seat formed by the two semi-circular segments of the mutually opposite seats.

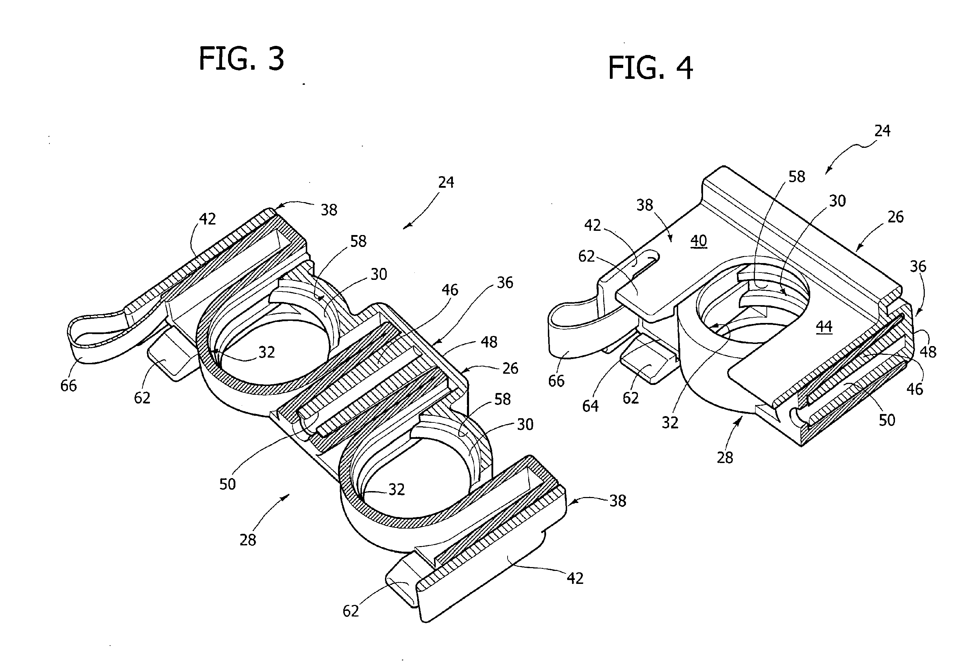

With reference in particular to Figures 3 and 4, the first body 26 has a central section 34 which separates the two U-shaped seats 30 and two lateral sections 38 each positioned on the outer side of a respective U-shaped seat 30.

Again with reference to Figures 3 and 4, each lateral section 38 comprises two mutually parallel front walls 40, mutually joined by a transverse wall 42. The walls 40, 42 of each lateral section 38 form a prismatic guide. The front walls 40 form on their edge one half of a respective seat 30, the other half being defined by a front wall 44 of the central section 36. The central section 36 of the first body 26 comprises, in addition to the front wall 44, a cone frustum shaped pin 46 with its axis parallel to the front wall 44. The cone frustum shaped pin 46 projects from a bottom wall 48 of the central section 36 and it has a central hole 50.

With reference in particular to Figure 1, the second body 28 of the bracket 24 comprises a central section 52 and two lateral section 54. Each U shaped seat 32 is defined between a respective lateral section 54 and the central section 52. Each lateral section 54 has a generally prismatic shape able to be coupled in guiding relationship with the corresponding lateral section 38 of the first body 26. The central section 52 of the second body 28 has a cone frustum shaped hole 56, within which the cone frustum shaped pin 46 of the first body 26 engages.

Each of the two seats 30, 32 is provided on its arched part with a groove 58, 60 which extends through the entire length of the arched part of the respective seat 30, 32. In the second body 28, the groove 60 also continues along the rectilinear parts of the seat 30, 32. The grooves 58, 60 receive the radial collars 16, 20 as shown in Figure 5, compressing the gasket 22 in the axial direction.

The two bodies 26, 28 which constitute the bracket 24 are provided with mutually co-operating snap-in engagement means. The two bodies 26, 28 mutually couple with a movement in a rectilinear direction, orthogonal to the longitudinal axes of the ends 18a of the tubes 18. The two lateral sections 54 of the second body 28 are inserted into the respective lateral sections 38 of the first body and are guided in rectilinear direction during the movement that brings the two bodies 26, 28 to mutual coupling conditions.

In the embodiment illustrated in the drawings, the snap-in engagement means that connect the two bodies 26, 28 to each other comprise elastically deformable teeth 62 formed on the lateral sections 38 of the first body 26. The elastically deformable teeth 62 are preferably formed at the ends of the front walls 40 of the lateral sections 38. The teeth 62 engage in snap-in fashion the lateral sections 54 of the second body 28 and are engaged in arrested condition with respective edges 64 of the lateral sections 54 of the second body 28.

In the position of mutual coupling between the two bodies, as shown e.g. in Figures 3 and 4, the cone frustum shaped pin 46 of the first body 26 is inserted in the cone frustum shaped hole 56 of the second body 28. As further assurance against accidental disengagement, the two bodies 26, 28 can also be joined by means of a screw (not shown) which engages the central hole 50 of the cone frustum shaped pin 46.

In the embodiment illustrated in the drawings, the first and the second body 26, 28 are mutually connected by means of a flexible strip 66 of plastic material. In this case, the two bodies 26, 28 form a single component which can be produced in a single injection moulding operation. This embodiment is particularly suited in view of manual mounting.

Alternatively, the strip 66 that joins the two bodies 26, 28 can be eliminated and in this case the two bodies 26, 28 are mutually separate. This second embodiment is suited especially in view of automatic assembling. For automatic assembly, an array of bodies 24 and an array of bodies 26 are mounted in respective magazines, in mutually stacked positions. The magazines are mutually approached from opposite parts with respect to the end of the tubes and the elements 26, 28 are automatically thrust towards each other by means of thruster elements which cause the ejection of the elements 26, 28 from the respective magazines and the mutual snap-in engagement.

It will thus be readily apparent that the fastening bracket according to the present invention enables to automate in very simple fashion the procedure for fastening the tubes to the heat exchanger. However, even if the assembly is performed manually, the assembly procedure is simpler and faster than traditional ones which require to tighten two clamps by means of screws.

## Claims

1. A bracket for fastening the ends (18a) of two tubes (18) to a heat exchanger (10) provided with a collecting tank (12) having two junction elements (14) respectively for the inflow and the outflow of the heat exchange fluid, wherein each of said tubes (18) has a radial collar (20) which is pressed in the axial direction against a corresponding collar (16) of a respective junction element (14) with the interposition of a sealing gasket (22),
**characterised in that** the bracket (24) comprises a first and a second body (26, 28) made of plastic material, each of which has two U-shaped seats (30, 32) which co-operate with the seats (30, 32) of the other body (26, 28) to define a circular seat which encloses said collars (16, 20), the two bodies (26, 28) being able to mutually fasten in snap-in fashion by means of a mutual movement in a rectilinear direction, orthogonal to the longitudinal axes of the tubes (18).

2. Bracket as claimed in claim 1, **characterised in that** each of said bodies (26, 28) comprises a central section (36, 52) and two lateral sections (38, 54), the U-shaped seats (30, 32) of each body (26, 28) being defined between the central section (36, 52) and the lateral sections (38, 54) of each body (26, 28).

3. Bracket as claimed in claim 2, **characterised in that** the lateral sections (38) of the first body (24) form a prismatic guide within which are inserted the lateral sections (54) of the second body (28).

4. Bracket as claimed in claim 3, **characterised in that** the lateral sections (38) of the first body (24) are provided with elastically deformable teeth (62) which engage in snap-in fashion the lateral sections (54) of the second body (28).

5. Bracket as claimed in any of the previous claims, **characterised in that** the U-shaped seats (30, 32) of each body (26, 28) comprise a groove (58, 60) within which are inserted the aforesaid radial collars (16, 20).

6. Bracket as claimed in claim 1, **characterised in that** the first and the second body (26, 28) are mutually connected by means of a flexible strip (66) obtained in monolithic fashion with the two bodies (26, 28).

7. Bracket as claimed in claim 1, **characterised in that** the first and the second body (26, 28) are separate from each other.
